# FASCICULE DE BREVET EUROPEEN

(11) **EP 1 043 284 B1**
(45) Date de publication et mention de la délivrance du brevet: **25.06.2003**
(21) Numéro de dépôt: 00400926.2
(22) Date de dépôt: 04.04.2000
(51) Int. Cl.: C03C 25/10, G02B 6/44, F42B 15/04, F41G 7/32

(54) **Fibre optique dégradable et son procédé de préparation**
Abbaubare optische Faser und ihr Herstellungsverfahren
Degradable optical fibre and method of producing same

(30) Priorité: 07.04.1999 FR 9904332
(43) Date de publication de la demande: 11.10.2000
(73) Titulaire: Aerospatiale Matra, 75116 Paris (FR)
(72) Inventeur: Hebert, Jean-Pierre, 92320 Chatillon (FR); Donnaint, Frédéric, 92140 Clamart (FR)
(74) Mandataire: Poulin, Gérard

(56) Documents cités:
- WO-A-97/05280
- DE-A- 19 712 253
- US-A- 5 482 520

## Description

La présente invention est relative à une fibre optique dégradable. Plus précisément, l'invention concerne une fibre optique autodégradable, c'est-à-dire contenant à l'intérieur même de sa structure des composés susceptibles de conduire à sa dégradation.

L'invention concerne également un procédé de préparation de ladite fibre.

Le domaine technique de l'invention peut être défini comme celui des fibres optiques, en général, en particulier des fibres optiques utilisées pour le guidage d'engins divers.

On sait que les fibres optiques ont acquis aujourd'hui une importance considérable dans tous les domaines industriels, que se soient les télécommunications, les composants optoélectroniques, les capteurs et les lasers, entre autres.

La structure classique d'une fibre optique comporte un coeur, une gaine entourant ce coeur et enfin un revêtement ou de protection en un polymère organique destiné à protéger la silice du coeur et de la gaine optique, notamment de l'humidité ambiante, et permettant de conserver aux fibres leurs propriétés mécaniques.

Les fibres optiques présentent l'avantage d'être insensibles au milieu environnant, compactes, et simples à fabriquer.

Ces propriétés sont mises à profit, en particulier dans le domaine des engins guidés par des fils et notamment des missiles filoguidés. En effet, les fibres optiques ont des propriétés mécaniques et optiques qui sont peu affectées par les agressions dues à divers agents extérieurs, en conséquence, les fibres optiques assurent des transmissions vidéo stables et de bonne qualité afin, par exemple, de permettre au tireur d'observer la zone survolée par le missile, puis de le guider jusqu'à sa cible.

Ainsi, les fibres optiques sont, elles, notamment, peu sensibles à un rayonnement électromagnétique, aux sollicitations thermiques, telles que celles causées, par exemple, par le passage dans le jet de gaz chaud rejeté par le propulseur du missile, enfin, la fibre est également très résistante à la corrosion sous contrainte et aux vieillissements chimiques et physiques.

Il s'est avéré que le stockage de longue durée des fibres optiques dans des conditions extrêmes d'humidité relative et de température ne posait aucun problème et ne provoquait aucune dégradation significative des propriétés mécaniques et optiques de celles-ci.

Toutefois, l'excellente résistance, voire la quasi-indifférence des fibres optiques aux agressions électromagnétiques, thermiques, mécaniques, chimiques, et autres, rencontrées en environnement naturel, qui. vient d'être décrite, n'est pas sans présenter un certain nombre d'inconvénients. En particulier, dans le cas où la fibre optique sert au guidage d'un engin, tel qu'un missile, après le déroulement de la bobine de fibre optique équipant le missile, la fibre repose sur le sol de manière aléatoire en fonction de la géométrie des accidents du terrain, des obstacles naturels, de la végétation, et des constructions diverses.

La présence de fibres optiques de grande longueur, dont la gaine est à haute résistance mécanique, peut constituer une gêne pour les personnels appelés à se déplacer sur le terrain, éventuellement à l'aide de divers véhicules, à bref délai, après les tirs de missiles. Les fibres optiques sont également une source de contraintes potentielles pour les personnes se trouvant au voisinage ou sur le lieu du tir.

En outre, ces fibres pratiquement indégradables vont constituer une source de pollution à long terme de l'environnement naturel.

Il est connu de dégrader des fibres optiques usagées par divers traitements mécaniques et/ou chimiques, cependant de tels procédés ne peuvent être mis en oeuvre sur des fibres de grande longueur, répandues sur une grande surface, dans un environnement naturel, ces fibres devant, en outre, généralement être dégradées dans un laps de temps relativement court.

Il existe donc un besoin pour une fibre optique comprenant un coeur, une gaine optique et un revêtement qui puisse être dégradée simplement, rapidement au terme de son utilisation, sans que ses propriétés optiques et mécaniques ne soient préalablement affectées.

Il existe en particulier un besoin pour une fibre optique, destinée notamment au guidage d'engins filoguidés, tels que des missiles, dont les propriétés optiques et mécaniques soient conservées lors de son stockage et jusqu'au terme de son utilisation, et qui dans toutes les conditions climatiques possibles, soit susceptible, à l'issue de celle-ci, de se dégrader suffisamment dans un délai déterminé.

Par dégradation, on entend notamment une perte des propriétés mécaniques susceptible de conduire à une dégradation du revêtement, puis à une destruction, désintégration de la fibre optique.

Le but de l'invention est donc de fournir une fibre optique comprenant un coeur, une gaine optique et un revêtement en un polymère organique qui répondent à l'ensemble des besoins mentionnés plus haut, qui ne présentent pas les inconvénients, limitations, défauts et désavantages des fibres optiques existantes, et qui résolve les problèmes posés par ces fibres optiques.

Ce but et d'autres encore sont atteints conformément à l'invention par une fibre optique comprenant un coeur, une gaine et un revêtement en polymère, dans laquelle au moins un calixarène emprisonnant au moins un composé susceptible d'être libéré dans des conditions déterminées de température, et/ou d'humidité et/ou d'irradiation, et de produire une dégradation dudit revêtement, est incorporé dans ledit revêtement.

Par dégradation, on entend généralement, selon l'invention, tout d'abord, des coupures espacées de loin en loin sur la fibre, par exemple, à l'issue de son déroulement, c'est-à-dire que la fibre ne comporte plus, alors, de brins très longs d'une longueur, par exemple, supérieure à 500 m.

Selon l'invention, ce processus de dégradation de la fibre, mis en évidence par des coupures discontinues de la fibre de loin en loin, est suffisamment avancé au bout d'un temps souhaité pour que la fibre ne présente plus de gêne pour les personnels. Ce processus de dégradation peut se poursuivre ensuite, mais plus lentement, en fonction des conditions d'environnement naturel, éventuellement jusqu'à une dégradation quasi totale de la fibre.

Selon l'invention, ledit au moins un calixarène se trouve inclus dans le revêtement de la fibre optique.

Les calixarènes sont des composés de type oligomères phénoliques cycliques utilisés principalement dans la chimie supramoléculaire et dans lesquels des cycles phénoliques successifs sont reliés par un groupe -CH₂- en position ortho (positions 2, 5).

Ces composés ont une excellente compatibilité avec tous les types de polymères, en particulier organiques, tels que les polymères utilisés pour le revêtement de la fibre optique.

En d'autres termes, les calixarènes ne réagissent pas avec lesdits polymères, en particulier organiques, dans leurs conditions générales d'emploi, ce qui s'avère particulièrement important, notamment dans le cas où la fibre optique est une fibre utilisée pour le guidage de missiles et autres engins guidés, car alors, aucune dégradation du polymère et donc de la fibre sous l'action du calixarène ne se produit, en particulier dans les conditions du stockage.

En outre, la présence de cycles phénoliques dans la structure des calixarènes implique également une très grande stabilité thermique, ce qui est étonnant pour des molécules organiques.

Cette propriété est également mise à profit dans l'invention car l'échauffement de la fibre, par exemple, due au tir du missile ne devrait ainsi pas avoir d'incidence sur les propriétés et les effets des calixarènes.

Les calixarènes inclus dans le revêtement de la fibre optique sont selon l'invention choisis, de préférence, parmi les calixarènes connus, comprenant de 4 à 10 cycles phénoliques, de préférence 4, 5, ou 6, ou 8 cycles phénoliques, c'est-à-dire les calix[4]arène, calix[5]arène, calix[6]arène, et calix[8]arène.

Ces calixarènes peuvent être éventuellement substitués par un ou plusieurs substituants choisis, par exemple, parmi les groupes alkyle linéaires ou ramifiés, alcényle, aryle, et aralkyle.

De préférence, ledit calixarène est choisi parmi les calixarènes dans lesquels tous les cycles phénoliques sont substitués en position para par un même substituant choisi, par exemple, parmi les groupes alkyle linéaires ou ramifiés de 1 à 6 atomes de carbone, de préférence ledit groupe alkyle est un groupe tertiobutyle.

Les calixarènes préférés selon l'invention seront donc les t-butyl calixarènes, par exemple, le t-butyl calix[6]arène, de formule (I) :

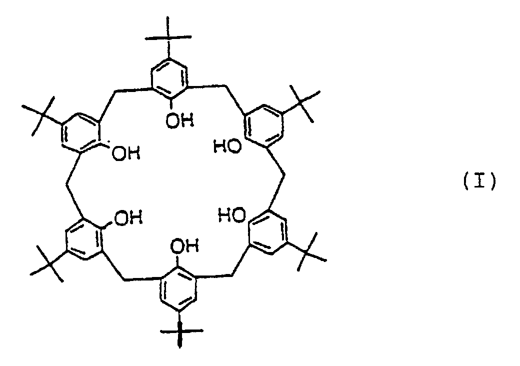

Les calixarènes sont généralement représentés par un panier de basket, ou cage, capable d'emprisonner une molécule.

Les dimensions de ce panier sont modulables suivant le nombre de molécules de phénol le composant et peuvent ainsi s'adapter en fonction de la taille de la molécule du composé à libérer ou substrat.

Le calixarène, en tant que tel, constitue le récepteur. Les molécules de récepteur sont liées entre elles par des liaisons covalentes, très fortes et difficiles à casser. Par contre, le substrat est lié au récepteur, c'est-à-dire à la cage dans laquelle il se trouve emprisonné par des liaisons secondaires de type Π - Π, qui elles sont bien plus faciles à casser, ce qui permet finalement de libérer le substrat.

Dans le cas de l'invention, le substrat est constitué d'au moins une molécule ou autre entité chimique d'au moins un composé susceptible d'être libéré dans des conditions déterminées de température, et/ou d'humidité et/ou d'irradiation et de conduire une dégradation dudit revêtement.

Chaque molécule de calixarène peut emprisonner une seule molécule ou entité chimique ou plusieurs molécules ou entités chimiques du composé ou des composés. Selon les dimensions du calixarène, par exemple 2, 3, 4, 5, ou 6, molécules ou entités chimiques identiques ou différentes pourront être emprisonnées à l'intérieur du calixarène.

Un dernier avantage des calixarènes est le fait qu'ils peuvent être produits industriellement à une grande échelle et à un coût modéré par des procédés connus et éprouvés, de ce fait, leur incorporation dans le revêtement de la fibre optique est pratiquement sans influence sur le prix de ces fibres.

Selon l'invention, il a pu être montré de manière surprenante que les calixarènes pouvaient libérer, par exemple, la ou les molécule(s) du ou des composé(s) qu'ils emprisonnent dans des conditions déterminées d'humidité, et/ou de température, et/ou d'irradiation, c'est-à-dire que la libération de la ou des molécule(s) ou entité(s) chimique(s) emprisonnée (s) ne se produit que dans les conditions bien définies, et seulement lorsque la fibre optique et, en particulier, son revêtement sont exposés à ces conditions spécifiques.

Il a pu être mis en évidence, par exemple, que la libération de la ou des dite(s) molécule(s) ou entité(s) chimique(s) emprisonnée(s) pouvait se produire dans des conditions combinées, déterminées, de température et d'humidité, de préférence, ces conditions combinées sont des conditions de température et d'humidité élevées.

Ainsi, ces conditions de température seront généralement définies par une température supérieure à 60°C, et sont notamment celles créées par l'échauffement de la fibre lors de son déroulement, dû au frottement, par exemple contre le capot à l'intérieur duquel elle était enfermée et à son passage dans le jet de gaz tiède à la sortie du réacteur d'un engin filoguidé.

Les conditions d'humidité combinées à ces conditions de température sont de même notamment celles régnant à la sortie de ce même réacteur.

De préférence, en outre, la libération de la ou desdites molécule(s) ou entité(s) chimique(s) se produit sous l'action d'une irradiation, de préférence d'une irradiation par les ultraviolets, c'est-à-dire que dans la forme de réalisation préférée selon l'invention, la combinaison de ces trois facteurs est nécessaire pour provoquer la libération du composé sous la forme d'une ou plusieurs molécule(s) ou entité(s) chimique(s) et donc initier la dégradation du revêtement.

Il est possible, selon l'invention, d'une part, de véhiculer, grâce aux calixarènes, des composés provoquant la dégradation du revêtement à l'intérieur du polymère sans que les propriétés essentielles de celui-ci et de la fibre optique ne soient affectées, et, d'autre part, de déclencher la libération desdites molécules seulement lorsque la fibre est soumise aux conditions déterminées indiquées plus haut.

La libération des composés dans le revêtement enclenche de même le processus de dégradation des fibres qui, toutefois, n'affecte pas, tout d'abord, les propriétés de ces fibres lors de leur mise en oeuvre effective, mais qui va se trouver achevé suite à cette utilisation dans une durée convenable, par exemple, dans un délai de l'ordre de quelques heures, de préférence inférieur ou égal à six heures.

Les conditions d'humidité et de température qui déclenchent la libération du composé par les calixarènes sont précisément celles rencontrées à la sortie des moteurs d'engins guidés, tels que des réacteurs de missiles.

En effet, la vapeur d'eau est présente à faible distance du missile dans les gaz d'échappement de son réacteur et la fibre va passer dans une telle zone.

Le processus de dégradation ne se trouve activé que lors du tir du missile - à savoir, par exemple, à la sortie du conteneur où il était stocké - et du déroulement de la fibre.

Le processus n'est toutefois pas aussi rapide que celui qui se serait produit si le composé conduisant à la dégradation avait été présent, tel quel (non emprisonné dans un calixarène), dans le revêtement ; du fait de l'inclusion de ces molécules ou entités chimiques, dans des calixarènes, la libération est progressive, contrôlée et toutes les qualités, notamment de transmission et de résistance, requises de la part de la fibre optique pendant le vol du missile sont intégralement conservées.

Une fois que la fibre à rempli son rôle de guidage, la dégradation indiquée par une baisse sensible de la résistance mécanique de la fibre se poursuit et s'achève dans les délais voulus, par exemple en quelques heures, notamment en moins d'environ six heures.

Par ce qu'on entend par dégradation, au sens de l'invention, on se reportera à la définition de ce terme, donnée plus haut.

En d'autres termes, le problème à la base de l'invention, qui est celui de la dégradation des fibres optiques, servant notamment au guidage d'engins filoguidés, tels que des missiles, est résolu par l'inclusion des calixarènes dans le revêtement de la fibre.

Les fibres optiques selon l'invention sont bien autodégradables dans le délai souhaité, et à l'aide d'une « gâchette » particulièrement adaptée à l'environnement régnant lors de l'utilisation préférée des fibres selon l'invention, à savoir lors du tir d'un engin filoguidé, tel qu'un missile qui rejette dans les gaz d'échappement du moteur de la vapeur d'eau à haute température.

Selon l'invention, le ou lesdits composé(s) susceptible(s) d'être libéré(s) dans lesdites conditions déterminées est(sont) choisi(s) parmi les composé(s) susceptible(s) de produire une dégradation du revêtement.

Ce ou ces composé(s) est(sont) choisi(s), par exemple, parmi les solvants organiques et les composés hydrosensibles.

De préférence, ledit composé est un composé hydrosensible, c'est-à-dire un composé qui, notamment dans les conditions indiquées plus haut, va se transformer au contact de l'eau, en un composé, telle qu'un acide produisant la dégradation.

Le composé emprisonné par le calixarène sera, de préférence, choisi parmi le chlorure de méthylène, la méthyl-éthyl-cétone et leurs mélanges.

Le composé hydrosensible sera, par exemple, le SO₃.

Le SO₃ libéré se trouvant au contact des molécules d'eau se transforme en acide sulfurique qui est un agent particulièrement efficace pour dégrader le revêtement. L'eau est naturellement présente notamment à la fois dans l'atmosphère, et dans les gaz éjectés du réacteur.

Tous les composés cités donnent une dégradation suffisante (telle qu'elle a été définie ci-dessus) de la fibre dans un délai de quelques heures, de préférence inférieur ou égal à 6 heures, par exemple en 1 heure, à compter du début de leur libération, par exemple, lors du tir du missile. Toutefois, ce délai de dégradation est suffisamment long et n'affecte pas les propriétés fondamentales, optiques et mécaniques de la fibre lors du tir.

Par composé emprisonné, on entend que chaque molécule de calixarène peut emprisonner une ou plusieurs molécule(s) du composé et/ou une ou plusieurs entité(s) chimique(s) dérivées de ce composé. Par entités chimiques, on entend, par exemple, les ions, les radicaux, issus dudit composé ou autres.

En outre, chaque molécule de calixarène peut emprisonner un ou plusieurs composés différents ou identiques.

A titre d'exemple, dans le cas du SO₃ et du calixarène de formule (I), celui-ci emprisonne six molécules de SO₃.

Le polymère est choisi, de préférence, parmi les polymères organiques classiques constituant les revêtements des fibres optiques.

Le polymère organique est choisi de préférence encore parmi les époxypolyacrylates et les époxypolyuréthanes.

Le revêtement peut être constitué d'une couche ou de plusieurs couches dudit polymère organique, par exemple, de deux couches.

L'épaisseur dudit revêtement est de quelques dizaines de micromètres, par exemple, de 60 µm. De même, les épaisseurs et la nature du coeur et de la gaine ont celles des fibres optiques classiques non autodégradables.

La fibre optique selon l'invention est de préférence une fibre optique monomode qui est celle de préférence utilisée pour le guidage des missiles, mais la fibre optique de l'invention peut être toute fibre optique comprenant un revêtement ou revêtement de protection de la gaine et du coeur, à savoir, par exemple, une fibre multimode à saut d'indice ou à gradient d'indice.

En fait, les fibres optiques autodégradables de l'invention se distinguent des fibres classiques non autodégradables simplement par le fait qu'un calixarène emprisonnant un composé, tel que défini plus haut est inclus dans le revêtement ou revêtement de protection.

L'invention concerne, en outre, un procédé de préparation de la fibre optique décrite ci-dessus. Ce procédé comprend essentiellement la préparation d'une préforme, la fusion de ladite préforme, le tirage de ladite préforme fondue au travers d'une filière pour former un fil de verre, le passage dudit fil de verre dans une filière d'enduction pour le recouvrir d'un revêtement, la polymérisation dudit revêtement, et l'enroulement de la fibre obtenue, un calixarène emprisonnant une molécule, d'un composé susceptible d'être libéré dans les conditions déterminées de température, d'humidité et, éventuellement, d'irradiation étant introduit dans la filière d'enduction pour y être mélangé au polymère s'y trouvant, et l'opération d'enroulement étant réalisée en dehors desdites conditions d'humidité, de température et, éventuellement, d'irradiation.

Le procédé selon l'invention est parfaitement fiable et maîtrisé et permet une incorporation homogène du calixarène dans le polymère. Selon l'invention, l'opération d'enroulement (ou de bobinage) est réalisée de préférence des conditions contrôlées d'humidité, de température et d'exposition à une irradiation, par exemple à une irradiation à la lumière ultraviolette.

Il est à noter que le stockage de la fibre, par exemple, du missile l'incorporant, devra être réalisé dans les mêmes conditions : par exemple, dans un conteneur fermé, opaque et à l'atmosphère asséchée par un composé adéquat, tel que du gel de silice ou autre, afin de ne pas provoquer une libération prématurée du composé produisant la dégradation.

Les fibres selon l'invention peuvent être stockées ainsi pendant des années sans problème et présenter lors de leur utilisation les propriétés d'usage et de dégradation ultérieure voulues.

Le calixarène emprisonnant le composé, décrit plus haut, est introduit dans la filière d'enduction en continu ou de manière discontinue, sous forme solide, par exemple, sous la forme d'une poudre finement divisée, ou bien sous la forme d'une solution dans un solvant adéquat, tel qu'un alcool aliphatique, par exemple, comprenant de 1 à 6 atomes de carbone, tel que le méthanol, l'éthanol, le propanol, etc. ou un mélange de ceux-ci.

En procédant ainsi, on obtient une répartition plus homogène du calixarène dans le revêtement.

L'invention concerne enfin l'appareil filoguidé, tel qu'un missile comprenant la fibre optique, décrite plus haut, par exemple, enroulée sur une bobine ou autre dispositif de déroulement.

L'invention va maintenant être décrite de manière plus précise dans la description qui va suivre, donnée à titre illustratif et non limitatif, en référence aux dessins joints dans lesquels :
- la figure 1 est un schéma fonctionnel décrivant le procédé de fabrication d'une fibre optique selon l'invention ;
- la figure 2 est une photographie prise au microscope électronique à balayage (MEB) d'une fibre autodégradable selon l'invention comprenant des calixarènes de formule (I) emprisonnant du SO₃, qui n'a pas été exposée à de la vapeur d'eau ;
- la figure 3 est une photographie au MEB de la même fibre, après cinq heures d'exposition à la vapeur d'eau ;
- la figure 4 est une photographie au MEB de la zone de rupture de la même fibre autodégradable ;
- la figure 5 est une photographie au microscope électronique à balayage (MEB) d'une fibre autodégradable selon l'invention, vue de face, dans laquelle les calixarènes emprisonnant du SO₃ ont été dilués dans du méthanol avant leur incorporation dans le revêtement. Sur la figure 5, la dégradation a été déclenchée ;
- la figure 6 est une photographie au MEB de la même fibre, vue de côté ;
- les figures 7, 8 et 9 sont des photographies au microscope électronique à balayage de fibres selon l'invention, dans lesquelles les calixarènes emprisonnant du CH₂Cl₂ ont été dilués dans du méthanol avant leur incorporation dans le revêtement.

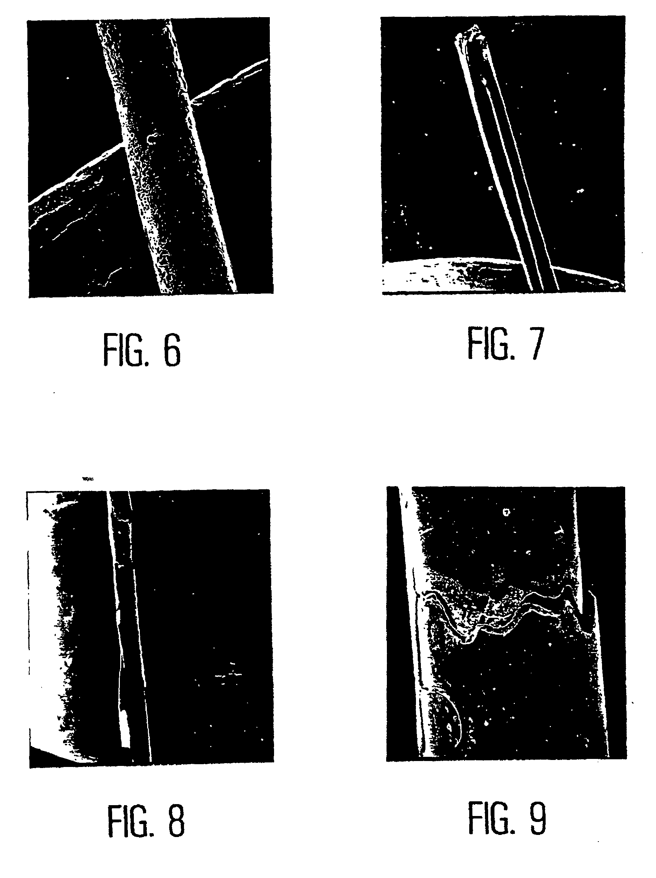

Les figures 7, 8 et 9 montrent l'état de dégradation de ces fibres après une heure d'exposition à la vapeur d'eau.

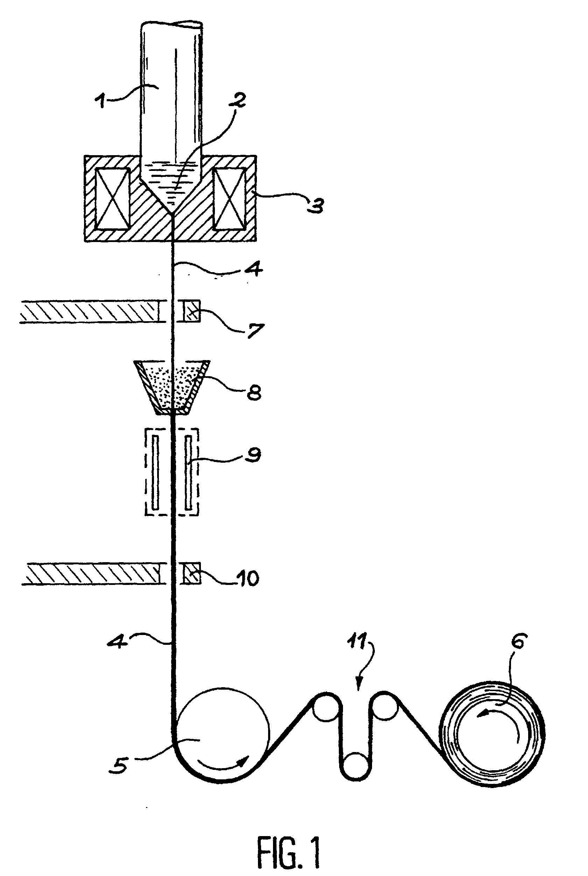

La figure 1 décrit le procédé de fabrication d'une fibre optique selon l'invention, encore appelé « fibrage ».

Le procédé décrit sur la figure 1 permet d'incorporer dans le revêtement de la fibre optique, le calixarène emprisonnant la molécule conduisant à la dégradation de la fibre, et d'obtenir ainsi une fibre selon l'invention.

La fibre optique qui est préparée par ce procédé est de préférence une fibre optique, dite fibre monomode, qui est la fibre utilisée de préférence dans l'application préférée de l'invention pour le guidage des missiles filoguidés, cependant, la préparation de tout types de fibres optiques présentant, selon l'invention, des capacités d'autodégradation est également possible par ce procédé, par exemple, des fibres multimodes à saut d'indice ou encore des fibres multimodes à gradient d'indice.

La première étape de fabrication de la fibre optique est la préparation d'une préforme (1). En effet, la fabrication d'un fil de verre de quelques dizaines de microns de diamètre ou moins n'étant pas possible, il faut tout d'abord définir à partir des caractéristiques souhaitées de la fibre les caractéristiques de la préforme.

La préforme (1) est à l'image de la fibre, seules les dimensions sont multipliées par un coefficient, par exemple, de l'ordre de 320.

Les valeurs des indices du coeur et de la gaine sont en tout point identiques à celles des fibres.

L'extrémité (2) de la préforme (1) est portée à la température de fusion dans un four à induction (3). Un filet de verre fondu (4) s'échappe du cône de fusion (3) et est tiré à l'aide d'un cabestan (5) pour être enroulé sur un bobinoir (6).

Entre le four à induction (3) et le cabestan (5), sont intercalés successivement :
- un capteur de diamètre de la fibre (7) qui asservit la vitesse de la fibre (4) à la vitesse de descente de la préforme, la température du four étant régulée à 2 100°C. La précision du capteur (7) est de l'ordre du demi-micromètre ;
- une filière d'enduction (8) dont le rôle est de recouvrir le fil de verre d'un revêtement qui va permettre un renforcement mécanique et une protection de la fibre contre les ions OH⁻ ;
- un caisson UV (9) pour la polymérisation de ce revêtement, toutefois la polymérisation peut être aussi réalisée dans l'air par chauffage à des températures généralement de 50 à 200°C, et le caisson (9) est alors omis ;
- un capteur de diamètre (10) pour l'asservissement de la filière d'enduction, le diamètre du revêtement devant rester constant.

On dépose, de préférence, deux couches pour former le revêtement, d'épaisseur sensiblement égale, une couche intérieure à faible module d'élasticité (environ 2 MPa) et une couche extérieure à module élevé (600 à 800 MPa).

Cet ensemble assure une protection plus efficace que le dépôt d'une seule couche. En effet, dans le dernier cas, les couches intérieures du matériau reçoivent moins d'énergie que celles près de la surface, ce qui crée une hétérogénéité dans le revêtement. Toutefois, il est bien évident que des fibres ne comportant qu'une couche peuvent aussi être préparées.

Afin de préparer la fibre selon l'invention, le calixarène emprisonnant une molécule susceptible d'être libérée et de dégrader le revêtement, est de préférence introduit dans la filière d'enduction où il est mélangé au polymère.

Cette opération peut être réalisée de manière continue ou discontinue. Le calixarène emprisonnant la molécule susceptible de dégrader le revêtement est ainsi présent de manière homogène dans le polymère. Ledit calixarène peut être introduit dans la filière sous forme de poudre, de préférence finement broyée, par exemple, dans le cas d'un calixarène emprisonnant du SO₃.

Le calixarène peut également être introduit dans la filière sous la forme d'une solution dans un solvant adéquat, par exemple du méthanol.

La proportion de calixarène dans cette solution est généralement de 1/1 000 à 20 % en poids. Un tel mode d'introduction s'applique aussi bien aux calixarènes emprisonnant du SO₃ qu'à ceux emprisonnant du CH₂Cl₂ ou encore de la méthyl-éthyl-cétone.

Le dernier équipement avant le bobinoir (6) est un dispositif de traction en continu (11) qui imprime un effort, par exemple, de 500 g à la fibre afin d'éliminer les points de faiblesse qui occasionneraient des ruptures lors des opérations de câblage ou de bobinage, ainsi que lors de la pose de ces câbles ou lors du déroulement des bobines.

La vitesse de fibrage est généralement de 80 à 120 mètres à la minute suivant la longueur de la préforme (1). La longueur standard de la fibre, en sortie de la tour de fibrage, est de l'ordre de plusieurs dizaines de km, de préférence de 100 km.

L'invention va maintenant être décrite en référence aux exemples suivants donnés à titre illustratif et non limitatif.

### Exemple 1

Dans cet exemple, on prépare des fibres comprenant les calixarènes de la formule (I) à l'aide d'un banc de fibrage permettant d'incorporer lesdits calixarènes, avec les molécules qu'ils emprisonnent, dans le revêtement, avant que celui-ci ne soit polymérisé.

Le banc de fibrage utilisé est sensiblement analogue à celui décrit plus haut et dans la figure 1.

Ce banc de fibrage permet d'obtenir des fibres possédant un revêtement uniforme d'époxypolyacrylate d'une épaisseur d'environ 50 µm comportant des calixarènes, lesdits calixarènes emprisonnant du SO₃ ou du chlorure de méthylène.

Trois types de fibres autodégradables ont ainsi été réalisés, toutes ont pour revêtement (primaire) principal de l'époxypolyacrylate :
- fibre avec de la poudre de calixarène emprisonnant du SO₃ finement broyée ;
- fibre préparée avec une solution de calixarènes emprisonnant du SO₃ mélangée à du méthanol qui agit ici comme un solvant ;
- fibre avec une solution de calixarènes emprisonnant du CH₂Cl₂ mélangée à 20 % de méthanol.

### Exemple 2

Les trois types de fibres préparées dans l'exemple 1 ont été testés quant à leur caractère autodégradable en les exposant à de la vapeur d'eau portée à 100°C pendant quelques secondes.

Les résultats obtenus lors de ces expériences d'exposition à de la vapeur d'eau sont regroupés dans le tableau I suivant.

**Tableau I**

| | | | |
|---|---|---|---|
| Types de fibres autodégradables | Fibre avec poudre de calixarène emprisonnant du SO₃ | Fibre Avec calixarène emprisonnant du SO₃ dans le méthanol | Fibre avec calixarène emprisonnant du CH₂Cl₂ dans le méthanol |
| Résultats obtenus après exposition à de la valeur d'eau | Echantillons corrodés rompus sous charge, en traction, en 5 heures | Echantillons corrodés rompus sous charge en 1 heure | Revêtement détaché de la fibre après 1 heure |

Comme on peut le constater sur le tableau I, ces résultats sont suffisants puisque toutes les cassures sont intervenus dans le délai souhaité.

Les différents échantillons de fibres obtenues à l'issue de l'exposition à la vapeur d'eau ont été étudiés au MEB.

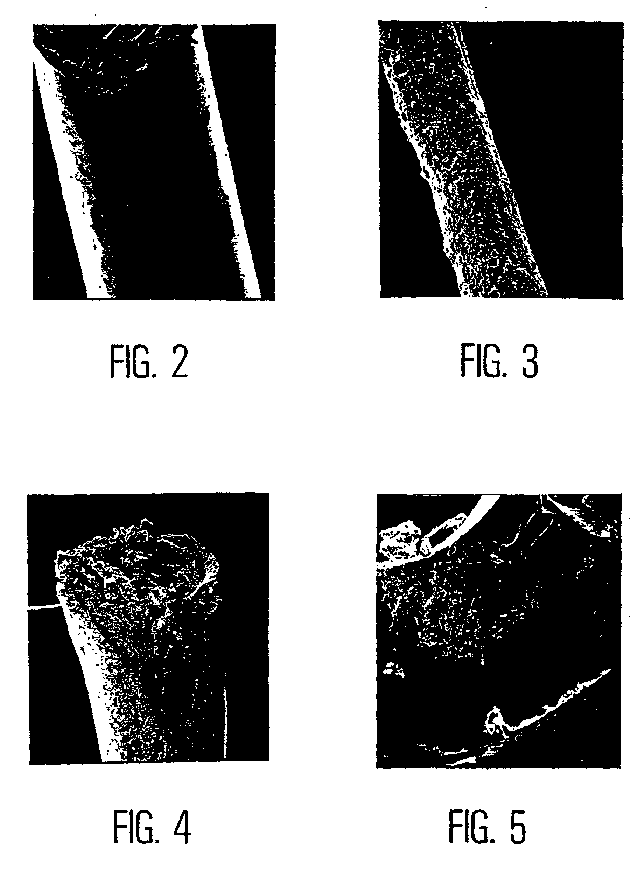

Les figures 2, 3 et 4 concernent les observations réalisées sur des fibres comprenant de la poudre de calixarène emprisonnant du SO₃.

La figure 2 est une photographie de fibre autodégradable non exposée, la figure 3 est une photographie d'une fibre, cinq heures après exposition, et la fibre 4 est une photographie de la zone de rupture de la fibre autodégradable.

Sur la figure 3, on observe bien les effets de l'acide sulfurique déjà rencontrés dans l'exemple 1. Cette fois-ci, ils prennent la forme de trous car les calixarènes ont été insérés dans la fibre sous la forme de poudre, donc, non uniformément.

Grâce à la figure 4, on peut également remarquer que le faciès de rupture de la fibre n'est pas droit, mais bien rongé par l'acide sulfurique.

Les figures 5 et 6 sont relatives aux observations réalisées sur des fibres dans lesquelles les calixarènes emprisonnant du SO₃ ont été dilués dans du méthanol avant d'être incorporés dans le revêtement.

La figure 5 est une photographie représentant une fibre autodégradable dont la dégradation a été déclenchée, vu de face.

La figure 6 est une photographie prise de côté de cette même fibre.

Sur ces figures 5 et 6, on constate une fissuration fine du revêtement jusqu'au coeur de la fibre. Par rapport au cas précédent, cela s'explique par le fait qu'ici, l'acide est réparti uniformément dans le revêtement.

Les figures 7, 8 et 9 sont relatives aux observations réalisées sur des fibres dans lesquelles les calixarènes emprisonnant du CH₂Cl₂ ont été dilués dans du méthanol avant d'être incorporés dans le revêtement.

Les figures 7, 8 et 9 sont des photographies montrant ainsi l'état de ces fibres au bout d'une heure.

Cette fois ci, on assiste à une forme d'attaque différente, puisque l'on constate que le revêtement se détache du coeur de la fibre. De plus, il apparaît également une fissuration nette de l'époxyacrylate.

L'ensemble des résultats indiqués ci-dessus dans l'exemple 2 montre clairement que les fibres optiques selon l'invention sont bien autodégradables, dans le délai souhaité et à l'aide d'une « gâchette » convenant particulièrement bien à l'environnement dans lequel ces fibres sont utilisées en particulier, l'environnement d'un missile puisque celui-ci rejette de la vapeur d'eau à haute température.

Dans les exemples 3 et 4 suivants, on expose les fibres ci-dessus à diverses conditions, afin de vérifier que leurs performances restent identiques à celles des fibres classiques qui ne sont pas autodégradables, notamment dans des conditions qui sont celles de stockage et de vol d'un missile.

### Exemple 3

Dans cet exemple, on étude l'exposition de fibres à une ambiance à hygrométrie variable ; la température restant ambiante et constante.

Le processus de dégradation devant être actionné par la mise au contact des calixarènes présents dans le gainage de la fibre avec des molécules d'eau, on a mis en place une série de tests en ambiance à hygrométrie variable afin de maîtriser la vitesse de la dégradation et permettre ainsi au missile d'évoluer dans tous les types d'environnement.

En fait, il ressort que tant que la fibre n'est pas placée dans les conditions d'humidité, par exemple d'humidité saturante impérativement combinée à un échauffement significatif, celle-ci reste insensible aux conditions environnantes.

Cela signifie que les fibres optiques autodégradables selon l'invention se comportent comme les fibres optiques « normales » et que leur résistance mécanique reste donc suffisante dans l'utilisation préférée pour le guidage de missiles.

### Exemple 4

Dans cet exemple, on étudie l'exposition des fibres à des contraintes mécaniques.

La dernière série de tests qui ont été effectuées concerne les agressions de type mécanique subies par la fibre.

En effet, il y a lieu de vérifier que la fibre conserve une bonne tenue mécanique lors du tir du missile.

Toutes les épreuves ont été menées de façon comparative avec les fibres non autodégradables afin de bien apprécier les possibilités apportées par les fibres optiques autodégradables.

Les résultats de résistance à la traction ont montré qu'il n'y avait pas de variations de résistance mécanique entre ces deux types de fibres, dans des conditions normales d'utilisation, c'est-à-dire hors des conditions définies plus haut pour la dégradation.

## Revendications

1. Fibre optique comprenant un coeur, une gaine, et un revêtement en polymère, dans laquelle au moins un calixarène emprisonnant au moins un composé susceptible d'être libéré dans des conditions déterminées de température, et/ou d'humidité et/ou d'irradiation, et de produire une dégradation du revêtement, est incorporé dans ledit revêtement.

2. Fibre optique selon la revendication 1, dans laquelle ledit au moins un calixarène est choisi parmi les calixarènes comprenant de 4 à 10 cycles phénoliques, éventuellement substitués.

3. Fibre optique selon la revendication 2, dans laquelle ledit calixarène est choisi parmi les calixarènes comprenant 4, 5, 6 et 8 cycles phénoliques, c'est-à-dire les calix[4]arène, calix[5]arène, calix[6]arène et calix[8]arène.

4. Fibre optique selon l'une quelconque des revendications 2 et 3, dans laquelle lesdits cycles phénoliques sont substitués par un ou plusieurs substituants choisi parmi les groupes alkyle linéaires ou ramifiés, les groupes alcényle, les groupes aryle, et les groupes aralkyle.

5. Fibre optique selon la revendication 4, dans laquelle tous les cycles phénoliques sont substitués en position para par un même substituant choisi parmi les groupes alkyle linéaires ou ramifiés de 1 à 6 atomes de carbone.

6. Fibre optique selon la revendication 5, dans laquelle ledit substituant est un groupe tertiobutyle.

7. Fibre optique selon la revendication 6, dans laquelle ledit calixarène est le t-butyl calix[6]arène.

8. Fibre optique selon l'une quelconque des revendications 1 à 7, dans laquelle ledit composé est libéré dans des conditions combinées déterminées d'humidité, et de température, et éventuellement, d'irradiation, de préférence d'irradiation par les ultraviolets.

9. Fibre optique selon l'une quelconque des revendications 1 à 8, dans laquelle lesdites conditions d'humidité, de température et, éventuellement, d'irradiation sont celles rencontrées à la sortie des moteurs d'engins guidés.

10. Fibre optique selon l'une quelconque des revendications 1 à 9, dans laquelle ledit ou lesdits composé(s) susceptible(s) d'être libéré(s) est(sont) choisi(s) parmi les solvant(s) et les composé(s) hydrosensibles.

11. Fibre optique selon la revendication 10, dans laquelle ledit composé est choisi parmi la méthyléthylcétone, le chlorure de méthylène, et leurs mélanges.

12. Fibre optique selon la revendication 10, dans laquelle ledit composé hydrosensible est le SO₃.

13. Fibre optique selon l'une quelconque des revendications 1 à 11, dans laquelle ledit polymère organique est choisi parmi les époxypolyacrylates et les époxypolyuréthanes.

14. Fibre optique selon l'une quelconque des revendications 1 à 13, dans laquelle ledit revêtement est constitué de deux couches.

15. Fibre optique selon l'une quelconque des revendications 1 à 14, qui est une fibre optique monomode.

16. Procédé de préparation de la fibre optique selon l'une quelconque des revendications 1 à 15, comprenant essentiellement la préparation d'une préforme, la fusion de ladite préforme, le tirage de ladite préforme fondue au travers d'une filière pour former un fil de verre, le passage dudit fil de verre dans une filière d'enduction pour le recouvrir d'un revêtement, la polymérisation dudit revêtement, et l'enroulement de la fibre obtenue, un calixarène emprisonnant une molécule, d'un composé susceptible d'être libéré dans les conditions déterminées de température, d'humidité et, éventuellement, d'irradiation étant introduit dans la filière d'enduction pour y être mélangé au polymère s'y trouvant, et l'opération d'enroulement étant réalisée en dehors desdites conditions d'humidité, de température et, éventuellement, d'irradiation.

17. Procédé selon la revendication 16, dans lequel l'opération d'enroulement est réalisée dans des conditions contrôlées d'humidité, de température et d'exposition à une irradiation, par exemple, à une irradiation à la lumière ultraviolette.

18. Procédé selon la revendication 16, dans lequel ledit calixarène est introduit dans la filière d'enduction sous forme solide.

19. Procédé selon la revendication 18, dans lequel ledit calixarène est introduit dans la filière sous la forme d'une poudre finement divisée.

20. Procédé selon la revendication 16, dans lequel ledit calixarène est introduit dans la filière d'enduction sous forme d'une solution.

21. Procédé selon la revendication 20, dans lequel ladite solution est une solution dans un alcool aliphatique comprenant de 1 à 6 atomes de carbone.

22. Engin filoguidé comprenant la fibre optique selon l'une quelconque des revendications 1 à 15.

## Patentansprüche

1. Optische Faser mit einem Kern, einem Mantel und einem Polymerüberzug, wobei wenigstens ein Calixaren, das mindestens eine Verbindung einschließt, die unter bestimmten Temperatur- und/oder Feuchtigkeits- und/oder Bestrahlungsbedingungen frei werden kann und fähig ist, den Überzug abzubauen, in diesem Überzug enthalten ist.

2. Optische Faser nach Anspruch 1, bei der dieses genannte, wenigstens eine Calixaren ausgewählt wird unter den Calixarenen mit 4 bis 10 eventuell substituierten Phenolringen.

3. Optische Faser nach Anspruch 2, bei dem das genannte Calixaren ausgewählt wird unter den Calixarenen mit 4, 5, 6 und 8 Phenolringen, das heißt dem Calix[4]aren, dem Calix[5]aren, dem Calix[6]aren und dem Calix[8]aren.

4. Optische Faser nach einem der Ansprüche 2 und 3, bei der die genannten Phenolringe durch einen oder mehrere Substituenten substituiert sind, ausgewählt unter den linearen oder verzweigten Alkyl-Gruppen, den Alkenyl-Gruppen, den Aryl-Gruppen und den Aralkyl-Gruppen.

5. Optische Faser nach Anspruch 4, bei der alle Phenolringe durch einen selben Substituenten in Para-Stellung substituiert sind, der ausgewählt wird unter den linearen oder verzweigten Alkyl-Gruppen mit 1 bis 6 Kohlenstoffatomen.

6. Optische Faser nach Anspruch 5, bei der der genannte Substituent eine Tertiärbutyl-Gruppe ist.

7. Optische Faser nach Anspruch 6, bei der das genannte Calixaren das t-Butyl-Calix[6]aren ist.

8. Optische Faser nach einem der Ansprüche 1 bis 7, bei der die genannte Verbindung unter kombinierten Feuchtigkeits-, Temperatur- und eventuell Bestrahlungsbedingungen frei wird, wobei die Bestrahlung vorzugsweise eine UV-Bestrahlung ist.

9. Optische Faser nach einem der Ansprüche 1 bis 8, bei der die genannten Feuchtigkeits-, Temperatur- und eventuell Bestrahlungsbedingungen diejenigen sind, die am Ausgang der Motoren von Lenkwaffen bzw. -raketen herrschen.

10. Optische Faser nach einem der Ansprüche 1 bis 8, bei der die genannte(n) Verbindung(en), die frei werden kann (können), ausgewählt wird (werden) unter den Lösungsmitteln und den wasserempfindlichen Verbindungen.

11. Optische Faser nach Anspruch 10, bei der die genannte Verbindung ausgewählt wird unter dem Methylethylketon, dem Methylenchlorid und ihren Mischungen.

12. Optische Faser nach Anspruch 10, bei der die genannte wasserempfindliche Verbindung SO₃ ist.

13. Optische Faser nach einem der Ansprüche 1 bis 11, bei der das genannte organische Polymer ausgewählt wird unter den Epoxypolyacrylaten und den Epoxypolyurethanen.

14. Optische Faser nach einem der Ansprüche 1 bis 13, bei der der genannte Überzug durch zwei Schichten gebildet wird.

15. Optische Faser nach einem der Ansprüche 1 bis 14, die eine optische Einmodenfaser ist.

16. Verfahren zur Herstellung der optischen Faser nach einem der Ansprüche 1 bis 15, das im Wesentlichen das Vorbereiten einer Vorform, das Einschmelzen dieser Vorform, das Ziehen dieser eingeschmolzen Vorform mittels einer Formdüse, um einen Glasfaden zu bilden, das Durchziehen dieses Glasfadens durch eine Beschichtungsdüse, um ihn mit einem Überzug zu beschichten, das Polymerisieren dieses Überzugs und das Aufwickeln der hergestellten Faser umfasst, wobei ein Calixaren, das ein Molekül einer Verbindung enthält, die unter bestimmten Temperatur-, Feuchtigkeits- und eventuell Strahlungsbedingungen frei werden kann, in die Beschichtungsdüse eingeführt wird, um mit dem dort vorhandenen Polymer vermischt zu werden, und die Aufwickeloperation nicht unter den genannten Temperatur-, Feuchtigkeits- und eventuell Strahlungsbedingungen durchgeführt wird.

17. Verfahren nach Anspruch 16, bei dem die Aufwickeloperation unter kontrollierten Bedingungen der Feuchtigkeit, der Temperatur und einer Bestrahlung, zum Beispiel einer UV-Bestrahlung, stattfindet.

18. Verfahren nach Anspruch 16, bei dem das Calixaren in fester Form in die Beschichtungsdüse eingeführt wird.

19. Verfahren nach Anspruch 16, bei dem das Calixaren in Form eines fein zerteilten Pulvers in die Beschichtungsdüse eingeführt wird.

20. Verfahren nach Anspruch 16, bei dem das Calixaren in Form einer Lösung in die Beschichtungsdüse eingeführt wird.

21. Verfahren nach Anspruch 16, bei dem die Lösung eine Lösung in einem alipathischen Alkohol ist, der 1 bis 6 Kohlenstoffatome umfasst.

22. Fadengelenkte Rakete bzw. Lenkwaffe mit der optischen Faser nach einem der Ansprüche 1 bis 15.

## Claims

1. Optical fiber comprising a core, a sheath, and a coating made of polymer, in which at least one calixarene imprisoning at least one compound capable of being released under defined conditions of temperature, and/or humidity and/or irradiation, and of producing a degradation of the coating, is incorporated in said coating.

2. Optical fiber according to Claim 1, in which said at least one calixarene is chosen from among the calixarenes comprising from 4 to 10 phenol rings, possibly substituted.

3. Optical fiber according to Claim 2, in which said calixarene is chosen from among the calixarenes comprising 4, 5, 6 and 8 phenol rings, that is to say calix[4]arene, calix[5]arene, calix[6]arene and calix[8]arene.

4. Optical fiber according to any one of Claims 2 and 3, in which said phenol rings are substituted by one or more substituents chosen from among the linear or branched alkyl groups and alkenyl, aryl and aralkyl groups.

5. Optical fiber according to Claim 4, in which all the phenol rings are substituted in the para position by one and the same substituent chosen from among the linear or branched alkyl groups with from 1 to 6 carbon atoms.

6. Optical fiber according to Claim 5, in which said substituent is a tertiary butyl group.

7. Optical fiber according to Claim 6, in which said calixarene is t-butyl calix[6]arene.

8. Optical fiber according to any one of Claims 1 to 7, in which said compound is released under defined combined conditions of humidity and temperature and possibly of irradiation, preferably ultra violet irradiation.

9. Optical fiber according to any one of Claims 1 to 8, in which said conditions of humidity and temperature and possibly of irradiation are those met with at the outlet from the engines of guided devices.

10. Optical fiber according to any one of Claims 1 to 9, in which said compound or compounds capable of being released is/are chosen from among the solvents and the water sensitive compounds.

11. Optical fiber according to Claim 10, in which said compound is chosen from among ethylmethyl ketone, methylene chloride, and their mixtures.

12. Optical fiber according to Claim 10, in which said water sensitive compound is SO₃.

13. Optical fiber according to any one of Claims 1 to 11, in which said organic polymer is chosen from among the epoxy polyacrylates and the epoxy polyurethanes.

14. Optical fiber according to any one of Claims 1 to 13, in which said coating is made up of two layers.

15. Optical fiber according to any one of Claims 1 to 14, which is a single mode optical fiber.

16. Method of preparation of the optical fiber according to any one of Claims 1 to 15, comprising essentially the preparation of a preform, the melting of said preform, the drawing of said molten preform through a die to form a glass thread, passage of said glass thread through a coating application die to cover it with a coating, the polymerization of said coating, and the winding of the fiber obtained, a calixarene imprisoning a molecule of a compound capable of being released under defined conditions of temperature, humidity and, possibly irradiation being introduced into the coating application die to be mixed with the polymer there, and the winding operation being carried out outside said conditions of humidity, temperature and possibly irradiation.

17. Method according to Claim 16, in which the winding operation is carried out under controlled conditions of humidity, temperature and exposure to radiation, for example, ultra violet light radiation.

18. Method according to Claim 16, in which said calixarene is introduced into the coating application die in solid form.

19. Method according to Claim 18, in which said calixarene is introduced into the die in the form of a finely divided powder.

20. Method according to Claim 16, in which said calixarene is introduced into the coating application die in the form of a solution.

21. Method according to Claim 20, in which said solution is a solution in an aliphatic alcohol comprising from 1 to 6 carbon atoms.

22. Wire guided device comprising an optical fiber according to any one of Claims 1 to 15.
